# EUROPÄISCHE PATENTSCHRIFT

(11) **EP 3 507 582 B1**
(45) Veröffentlichungstag und Bekanntmachung des Hinweises auf die Patenterteilung: **12.08.2020**
(21) Anmeldenummer: 17767753.1
(22) Anmeldetag: 31.08.2017
(51) Int. Cl.: G01L 3/14

(54) **DREHMOMENTSENSOR MIT DICHTUNGSMEMBRAN**
TORQUE SENSOR WITH SEAL MEMBRANE
CAPTEUR DE COUPLE AVEC MEMBRANE D'ÉTANCHÉITÉ

(30) Priorität: 31.08.2016 DE 102016010552
(43) Veröffentlichungstag der Anmeldung: 10.07.2019
(73) Patentinhaber: SENSODRIVE GmbH, 82234 Weßling (DE)
(72) Erfinder: HAEHNLE, Matthias, 80634 Muenchen (DE); SPORER, Norbert, 82549 Koenigsdorf (DE); GRANDL, Michael, 81245 Muenchen (DE); SATTLER, Mathias, 82319 Starnberg (DE)
(74) Vertreter: Beyer, Andreas
(86) Internationale Anmeldenummer: PCT/EP2017/071833
(87) Internationale Veröffentlichungsnummer: WO 2018/041934

(56) Entgegenhaltungen:
- EP-A2- 1 353 159
- WO-A1-2010/108674
- US-A1- 2011 041 625

## Beschreibung

Die Erfindung betrifft einen Drehmomentsensor gemäß dem Oberbegriff des Patentanspruchs 1.

Aus dem Dokument EP 1 353 159 A2 ist ein Drehmomentsensor in Form eines monolithischen Aufnahmeteils bekannt.

Der Erfindung liegt die Aufgabe zugrunde, einen kompakten, einfach aufgebauten Drehmomentsensor bereitzustellen, der gegenüber mechanischen Störeinflüssen unempfindlicher ist.

Diese Aufgabe ist erfindungsgemäß durch einen Drehmomentsensor mit den im Patentanspruch 1 genannten Merkmalen gelöst.

Ein solcher Drehmomentsensor hat einen Grundkörper, der sich in einer radialen Richtung des Grundkörpers von einem ringförmigen Innenflansch mit ersten Krafteinleitungsstellen über einen mit Ausgangssignale generierenden Messwertaufnehmern ausgestatteten, mechanisch geschwächten Sensorabschnitt zu einem ringförmigen Außenflansch mit zweiten Krafteinleitungsstellen erstreckt, wobei eine axial zwischen dem Außenflansch und dem Innenflansch angeordnete gummielastische Dichtungsmembran den mechanisch geschwächten Sensorabschnitt fluiddicht überdeckt. Dies verhindert beispielsweise, dass durch einen zur mechanischen Schwächung mit axial durchgehenden Ausschnitten versehenen Sensorabschnitt Fluid hindurchtreten kann.

Erfindungsgemäß befindet sich die gummielastische Dichtungsmembran axial zwischen den zweiten Krafteinleitungsstellen und dem mechanisch geschwächten Sensorabschnitt. Auf diese Weise lassen sich die Messwertaufnehmer bzw. Dehnmesstreifen zuverlässig vor Fluidkontakt schützen sowie, falls vorhanden, ein Getriebe abdichten.

Die Dichtungsmembran kann an den Drehmomentsensor geklemmt oder mit ihm verklebt sein.

Vorzugsweise ist die Dichtungsmembran als scheibenförmige Ringmembran ausgebildet, wodurch sie sich leicht zwischen Außen- und Innenflansch einbringen lässt.

Vorzugsweise ist die Dichtungsmembran an dem Außen- und/oder Innenflansch angebracht.

Vorzugsweise ist die Dichtungsmembran ein Gummi-Formteil, Gummidrehteil oder ein mittels Wasserstrahlbearbeitung hergestelltes Gummiteil.

Vorzugsweise hat die Dichtungsmembran einen um mindestens den Faktor 10² geringeren E-Modul als der Grundkörper, vorzugsweise einen um den Faktor 10³ bis 10⁵ geringeren E-Modul, vorzugsweise einen um den Faktor 10⁴ bis 10⁵ geringeren E-Modul. Durch einen kleineren E-Modul der Dichtungsmembran wird deren Einfluss auf die Verformung im Sensorabschnitt immer weiter verringert.

Vorzugsweise sind die zweiten Krafteinleitungsstellen durch einen radialelastischen Materialabschnitt mit dem Sensorabschnitt verbunden. Auf diese Weise kann eine weitgehende Entkopplung in radialer Richtung erreicht werden, sodass beispielsweise Rundheitsabweichungen an den zweiten Krafteinleitungsstellen kompensiert werden können. Solche Rundheitsabweichungen können beispielsweise auf Fertigungstoleranzen beruhen. Die Folge kann ein Übersprechen der Messwertaufnehmer sein. Um dadurch bedingte Messfehler zu vermeiden, hat der radialelastische Materialabschnitt eine bezüglich radialer Verformungen niedrige Steifigkeit, um Axialkräfte und Kippmoment auszugleichen, wohingegen er bezüglich Torsionskräften quasistarr ist, d.h. eine hohe Steifigkeit hat. Der radialelastische Materialabschnitt kann so ausgestaltet sein, dass Verformungen aus Axialkräften und Kippmomenten ausgeglichen werden.

Der radialelastische Materialabschnitt kann ein in axialer Richtung des Grundkörpers verlaufender dünnwandiger Materialabschnitt sein. Dabei muss der Materialabschnitt sich nicht ausschließlich in axialer Richtung erstrecken, sondern kann auch nur eine axiale Komponente aufweisen. Beispielsweise kann ein solcher axialer Materialabschnitt konisch oder mäandernd ausgeführt sein. Vorzugsweise ist dieser dünnwandige Materialabschnitt ein nur in axialer Richtung des Grundkörpers verlaufender Abschnitt, d.h. ein ausschließlich in axialer Richtung verlaufender Materialabschnitt.

Als Messwertaufnehmer kommen beispielsweise druck- oder zugempfindliche Messwertaufnehmer in Frage, z. B. Dehnungsmessstreifen, es ist jedoch auch möglich, mittels eines Encoders die Winkeldifferenz zwischen dem Innenflansch und dem Außenflansch des Drehmomentsensors zu messen. Ferner ist es auch möglich, ein magnetostriktives Messverfahren einzusetzen.

Vorzugsweise ist der Außenflansch monolithisch oder mehrteilig, wobei der radialelastische Materialabschnitt und die zweiten Krafteinleitungsstellen vorzugsweise ein Teil bilden.

Vorzugsweise ist dieser dünnwandige Materialabschnitt als dünnwandiger Boden einer sich im Außenflansch in Umfangsrichtung erstreckenden Nut ausgebildet. Vorzugsweise befindet sich die Nut am Außenumfang oder am Innenumfang des Außenflanschs. Insgesamt wird so ein einfach zu fertigender und kompakter Aufbau des Drehmomentsensors ermöglicht.

Die Krafteinleitungsstellen können Bohrungen oder Zahnzwischenräume oder eine Kombination aus beidem sein, wobei sich die Bohrungen und/oder die die Zahnzwischenräume ausbildenden Zähne vorzugsweise in einer axialen Richtung des Grundkörpers erstrecken. Mit Bohrungen sind hier und im weiteren Text zumindest einseitig offene Öffnungen gemeint, beispielsweise solche mit kreisförmigem oder polygonalem Querschnitt.

Vorzugsweise verbindet der radialelastische Materialabschnitt jeweils als Bohrung ausgebildete zweite Krafteinleitungsstellen mit in einem unbeanspruchten Grundzustand des Drehmomentsensors konzentrischen, am Außenflansch befindlichen und ebenfalls jeweils als Bohrung ausgebildeten dritten Krafteinleitungsstellen. Derartige konzentrische zweite und dritte Krafteinleitungsstellen lassen sich einfach in einem Bohrvorgang fertigen.

In einer als Bohrung ausgebildeten dritten Krafteinleitungsstelle, die sich im Außenflansch des Sensors (nicht radialelastischen Materialabschnitts) befindet, kann ein vorzugsweise als Anschlagstift ausgebildetes Anschlagelement fixiert sein, das sich in axialer Richtung der Bohrung erstreckt und in dem unbeanspruchten Grundzustand des Drehmomentsensors umfangsseitig berührungslos von einer ebenfalls als Bohrung ausgebildeten vierten Krafteinleitungsstelle umgeben ist. Dadurch kann insbesondere eine Überlastung des mechanisch geschwächten Sensorabschnitts vermieden werden, weil dann das Anschlagelement die Wand der als Bohrung ausgebildeten vierten Krafteinleitungsstelle berührt und durch dieses Abstützen für eine zusätzliche Versteifung im Drehmomentsensor sorgt. Vorzugsweise hat das Anschlagelement eine zur dritten Krafteinleitungsstelle komplementäre Form, wobei das Anschlagelement auch als Hohlkörper ausgebildet sein kann.

Vorzugsweise haben als Bohrung ausgebildete dritte Krafteinleitungsstellen einen von als Bohrung ausgebildeten zweiten Krafteinleitungsstellen verschiedenen Durchmesser. Das hat den Vorteil, dass als Anschlagelement beispielsweise ein Anschlagstift mit konstantem Durchmesser verwendet werden kann, wobei dessen Durchmesser dem kleineren Durchmesser der als Bohrung ausgebildeten zweiten und dritten Krafteinleitungsstellen entsprechen muss, um berührungslos von der jeweils anderen der als Bohrung ausgebildeten zweiten und dritten Krafteinleitungsstellen umgeben werden zu können.

Vorzugsweise haben als Bohrung ausgebildete dritte Krafteinleitungsstellen einen größeren Durchmesser als ebenfalls als Bohrung ausgebildete zweite Krafteinleitungsstellen. Vorteilhaft lässt sich so von dem der zweiten Krafteinleitungsstelle abgewandten Ende einer als Durchgangsbohrung ausgebildeten dritten Krafteinleitungsstelle kontrollieren, ob das eine Ende des Anschlagelements von der dritten Krafteinleitungsstelle tatsächlich berührungslos umgeben wird. Hingegen ist das andere Ende des Anschlagelements in der zweiten als Bohrung ausgebildeten Krafteinleitungsstelle fixiert und im montierten Zustand des Drehmomentsensors nicht einsehbar.

Vorzugsweise sind die zweiten Krafteinleitungsstellen Teil eines radial vom Außenflansch vorstehenden Abschnitts, von dem sich der radialelastische Materialabschnitt in axialer Richtung des Grundkörpers zum Sensorabschnitt erstreckt. Dadurch ist ein einfacher Montagezugang zu den zweiten Krafteinleitungsstellen möglich.

Der Außenflansch kann monolithisch ausgeführt sein, wobei der Drehmomentsensor aus Stahl, Aluminium oder einer Aluminiumlegierung bestehen kann.

Alternativ kann der Außenflansch mehrteilig sein, wobei der radialelastische Materialabschnitt und die zweiten Krafteinleitungsstellen vorzugsweise ein gemeinsames Teil bilden, das vorzugsweise aus Stahl ist, während der andere Teil des Außenflansches aus Aluminium oder einer Aluminiumlegierung bestehen kann. Diese Mehrteiligkeit erlaubt eine für jedes Teil geeignete Materialwahl. So ist es vorteilhaft, den radial elastischen Teil des Drehmomentsensors aus Stahl zu fertigen und den restlichen Teil des Drehmomentsensors aus Aluminium oder einer Aluminiumlegierung, weil die beiden letztgenannten Materialien keine Hysterese und eine geringe innere Dämpfung bei hoher Festigkeit haben. Bei einem monolithisch ausgeführten Drehmomentsensor ist es deshalb ebenfalls vorteilhaft, Aluminium oder eine Aluminiumlegierung als Material zu wählen.

Vorzugsweise bilden der radialelastische Materialabschnitt und die zweiten Krafteinleitungsstellen ein mit dem Rest des Außenflansches, vorzugsweise mittels Schrauben, lösbar verbundenes Teil. Auf diese Weise kann ein Austausch eines Außenflanschteils schnell und kostengünstig erfolgen.

Vorzugsweise sind die zweiten Krafteinleitungsstellen monolithisch mit einem Gehäuse ausgeführt, was die Herstellung vereinfachen kann.

Vorzugsweise sind die Messwertaufnehmer Dehnmessstreifen, deren Arbeitsprinzip elektrisch, optisch oder piezoelektrisch sein kann.

Der mechanisch geschwächte Sensorabschnitt kann radial verlaufende erste und zweite Verbindungsstege umfassen, welche gleiche oder unterschiedliche mechanische Eigenschaften haben und in Umfangsrichtung alternierend angeordnet sind. Mit "radial verlaufend" ist hier jeder Verlauf des mechanisch geschwächten Sensorabschnitts gemeint, der zumindest eine radiale Komponente umfasst. Der radiale Verlauf kann ausschließlich radial sein, jedoch sind davon abweichende Verläufe mit radialen Komponenten ohne weiteres möglich, beispielsweise ein mäandernder Verlauf.

Vorzugsweise sind die Verbindungsstege zur Messung von Schub- und/oder Biegespannungen eingerichtet.

Vorzugsweise sind, falls die ersten Verbindungsstege sich mechanisch von den zweiten Verbindungsstege unterscheiden, als Messwertaufnehmer dienende Dehnmessstreifen nur an den ersten Verbindungsstegen oder an beiden Verbindungsstegen angebracht. Mit der zweiten Alternative lässt sich der Messbereich vergrößern. Grundsätzlich lässt sich durch eine mechanisch unterschiedliche Ausgestaltung der ersten und zweiten Verbindungsstege erreichen, dass die von einem Dehnmessstreifen gemessene Oberflächendehnung sich trotz gleicher mechanischer Belastung, im vorliegenden Fall also bei gleichem wirksamen Drehmoment voneinander unterscheidet. Bei Vorhandensein mechanisch unterschiedlicher erster und zweiter Verbindungsstege können deshalb beispielsweise die ersten Verbindungsstege so ausgestaltet sein, dass an ihnen befestigte Dehnmessstreifen bereits bei geringen wirksamen Drehmomenten ein relativ hohes elektrisches Nutzsignal erzeugen. Mit solchermaßen ausgestalteten Verbindungsstegen lassen sich geringe Drehmomente besser aufgelöst messen, allerdings ist der Messbereich dann auch entsprechend geringer. Bei dem gewählten Beispiel können die zweiten Verbindungsstege dann so ausgestaltet sein, dass an ihnen befestigte Dehnmessstreifen erst bei höheren Drehmomenten gute elektrische Nutzsignale liefern, was zum Messen höherer Drehmomente vorteilhaft ist. Der Messbereich der an den zweiten Verbindungsstegen angebrachten Dehnmessstreifen ist dann auch entsprechend größer.

Ein Anschlagflansch, der nur mit dem Innenflansch drehfest verbunden ist und mindestens eine zu einer axialen Außenflanschbohrung in einem unbeanspruchten Grundzustand des Drehmomentsensors konzentrische Anschlagflanschbohrung aufweist, kann sich an einer den zweiten Krafteinleitungsstellen entgegengesetzten Seite des Außenflansches zum Sensorabschnitt parallel erstrecken. Auf diese Weise lässt sich eine Versteifungsmöglichkeit mittels eines oder mehrerer Anschlagstifte bei Überlast am Drehmomentsensor bedarfsgerecht hinzufügen. Die Funktionsweise entspricht dabei dem oben in Bezug auf die Anschlagstifte Beschriebenen.

Vorzugsweise hat die Anschlagflanschbohrung einen von der Außenflanschbohrung verschiedenen Durchmesser, wobei die Bohrung mit dem kleineren Durchmesser den Anschlagstift fixieren kann. Auf diese Weise kann, wie oben bereits erwähnt, ein Ende eines Anschlagstifts mit konstantem Durchmesser entweder in der Außenflanschbohrung oder der Anschlagflanschbohrung fixiert werden, während das andere Ende des Anschlagstifts von der jeweils anderen der Außenflanschbohrung oder der Anschlagflanschbohrung in einem unbelasteten Grundzustand des Drehmomentsensors berührungslos umgeben ist.

Vorzugsweise sind im Anschlagflansch mehrere in Umfangsrichtung des Außenflansches äquidistant verteilte Anschlagflanschbohrungen vorhanden, was zu einer besseren Lastverteilung in Umfangsrichtung bei Überlast führen kann.

Vorzugsweise hat der Anschlagflansch bezüglich einer Linie durch die Mittelachse des Innenflansches im gleichen Abstand gegenüberliegende Anschlagflanschbohrungen, was zu einer besseren Lastverteilung in radialer Richtung bei Überlast führen kann.

Vorzugsweise ist ein sich in axialer Richtung erstreckender Anschlagstift entweder in der Außenflanschbohrung oder der Anschlagflanschbohrung fixiert und ist in dem unbeanspruchten Grundzustand des Drehmomentsensors umfangsseitig berührungslos von der gegenüberliegenden jeweils anderen der Außenflanschbohrung oder der Anschlagflanschbohrung umgeben.

Durch obige Maßnahmen kann eine Bruchsicherung durch Überlast einfach und kompakt im Drehmomentsensor vorgesehen werden, sodass auch eine plastische Verformung des Drehmomentsensors vermieden werden kann. Dabei sind die hier vorgesehenen Axialbohrungen einfacher zu fertigen als Radialbohrungen. Des Weiteren kann der Spalt zwischen dem Anschlagstift und der entsprechenden Anschlagflanschbohrung oder der Außenflanschbohrung geringer gewählt werden als bei einer radialen Ausrichtung des Anschlagstifts, vgl. hierzu die Figuren 6a, 6b und 7a, 7b in EP 1 353 159 A2. Zudem ist ein radial verlaufender Anschlagstift gegenüber axialen Verformungen und Kippmomenten am Drehmomentsensor empfindlicher.

Der Anschlagflansch kann monolithisch mit dem Innenflansch ausgeführt sein, was einen einfachen und kompakten Aufbau ermöglichen kann.

Alternativ kann der Anschlagflansch ein mit dem Innenflansch verbundenes Bauteil sein, vorzugsweise ein mit dem Innenflansch lösbar verbundenes Bauteil. Auf diese Weise kann für den Anschlagflansch ein steiferes Material gewählt werden als für den Grundkörper des Drehmomentsensors und insbesondere den Sensorabschnitt.

Vorzugsweise kann der Anschlagflansch ein über eine Presspassung mit dem Innenflansch verbundenes Bauteil sein.

Vorzugsweise kann der Anschlagflansch ein über parallel zur axialen Richtung des Grundkörpers verlaufende Schrauben lösbar mit dem Innenflansch verbundenes Bauteil sein. Alternativ kann der Anschlagflansch mit dem Innenflansch mittels einer Klebeverbindung, einer Klebeverbindung und Schrauben, oder einer Presspassung und Schrauben oder auf andere Art verbunden sein.

Die Messwertaufnehmer können Dehnmessstreifen sein, die einen mit dem Grundkörper verbundenen Messgitterabschnitt und einen sich an den Messgitterabschnitt anschließenden, freien Verbindungsabschnitt mit mindestens einem elektrischen Anschlusspunkt haben. Auf diese Weise lassen sich die Dehnmessstreifen schnell und einfach mit ihrem einen Ende an einer Oberfläche und mit ihrem anderen Ende an einem elektrisches Bauteil anbringen.

Vorzugsweise ist der mindestens eine elektrische Anschlusspunkt ein Lötpad.

Vorzugsweise entspricht der Mindestabstand zwischen dem elektrischen Anschlusspunkt und dem Messgitterabschnitt der Länge des Messgitterabschnitts in dessen Längsrichtung, was die Handhabung des Dehnmessstreifens zu Anbringungszwecken erleichtert.

Vorzugsweise ist der Verbindungsabschnitt elastisch und/oder streifenförmig.

Vorzugsweise ist der Verbindungsabschnitt in einem unbeanspruchten Grundzustand in eine Vorzugsrichtung gebogen, z. B. U-förmig gebogen.

Ein Halteabschnitt, der zum temporären Halten des Verbindungsabschnitts an einem elektrischen Bauteil ausgebildet ist, kann sich jenseits des mindestens einen elektrischen Anschlusspunkts an den Verbindungsabschnitt anschließen. Dadurch wird die Anbringung des anderen Endes des Dehnmessstreifens an einem elektrischen Bauteil erleichtert.

Vorzugsweise hat der Halteabschnitt eine zentrale Durchgangsbohrung oder Vertiefung. Diese kann zum temporären Halten des Halteabschnitts an einem elektrischen Bauteil dienen, beispielsweise mittels eines Schraubenziehers.

Vorzugsweise ist der Halteabschnitt selbstklebend. In diesem Fall könnte der Halteabschnitt werkzeuglos temporär an einem elektrischen Bauteil gehalten werden.

Vorzugsweise ist der Halteabschnitt abgerundet, was Verletzungen bei seiner Handhabung vorbeugen kann.

Die Erfindung wird nachfolgend anhand schematischer Zeichnungen genauer erläutert. Dabei sind ähnliche Elemente mit ähnlichen Bezugszeichen versehen, wobei zur Verbesserung der Leserlichkeit der Zeichnungen auf die Darstellung solcher Bezugszeichen teilweise verzichtet worden ist. Es zeigen:
- Fig. 1: links - einen ersten Drehmomentsensor in einer Perspektivansicht von schräg oben, sowie rechts - den ersten, monolithischen Drehmomentsensor in einer Querschnittansicht,
- Fig. 2: rechts - einen zweiten Drehmomentsensor in einer Perspektivansicht von schräg unten, sowie links - den zweiten, monolithischen Drehmomentsensor in einer Querschnittansicht,
- Fig. 3: rechts - einen dritten Drehmomentsensor in einer Perspektivansicht von schräg unten, sowie links - den dritten, zweiteiligen Drehmomentsensor in einer Querschnittansicht,
- Fig. 4: rechts - einen vierten Drehmomentsensor in einer Perspektivansicht von schräg unten, sowie links - den vierten, zweiteiligen Drehmomentsensor in einer Querschnittansicht,
- Fig. 5: einen fünften Drehmomentsensor mit identischen Verbindungsstegen in einer Perspektivansicht,
- Fig. 6: einen sechsten Drehmomentsensor mit unterschiedlichen, alternierend angeordneten Verbindungsstegen in einer Perspektivansicht,
- Fig. 7: einen siebten Drehmomentsensor, der mit einem Anschlagflansch monolithisch ausgeführt ist, in einer Querschnittansicht,
- Fig. 8: einen achten Drehmomentsensor mit einem Anschlagflansch, der ein separat über eine Presspassung mit dem Drehmomentsensor verbundenes Bauteil ist, in einer Querschnittansicht,
- Fig. 9: einen dem achten Drehmomentsensor aus Fig. 8 ähnlichen, neunten Drehmomentsensor, bei dem der Anschlagflansch über eine Schraubverbindung mit dem Drehmomentsensor verbunden ist, in einer perspektivischen Explosionsansicht von schräg unten,
- Fig. 10: einen zehnten Drehmomentsensor mit einer geklemmten Dichtungsmembran in einer Querschnittansicht,
- Fig. 11: einen elften Drehmomentsensor mit einer darin verklebten Dichtungsmembran in einer Querschnittansicht,
- Fig. 12: den ersten Drehmomentsensor aus Fig. 1 in einer Leichtbauanordnung zusammen mit einem Harmonic-Drive-Getriebe in einer Querschnittansicht,
- Fig. 13: die Leichtbauanordnung aus Fig. 12 in auseinander gezogener Darstellung,
- Fig. 14: oben - einen herkömmlichen Dehnmessstreifen, sowie unten - eine herkömmliche Befestigung des Dehnmessstreifens, und
- Fig. 15: oben - einen alternativen Dehnmessstreifen, sowie unten - eine Befestigung des alternativen Dehnmessstreifens.

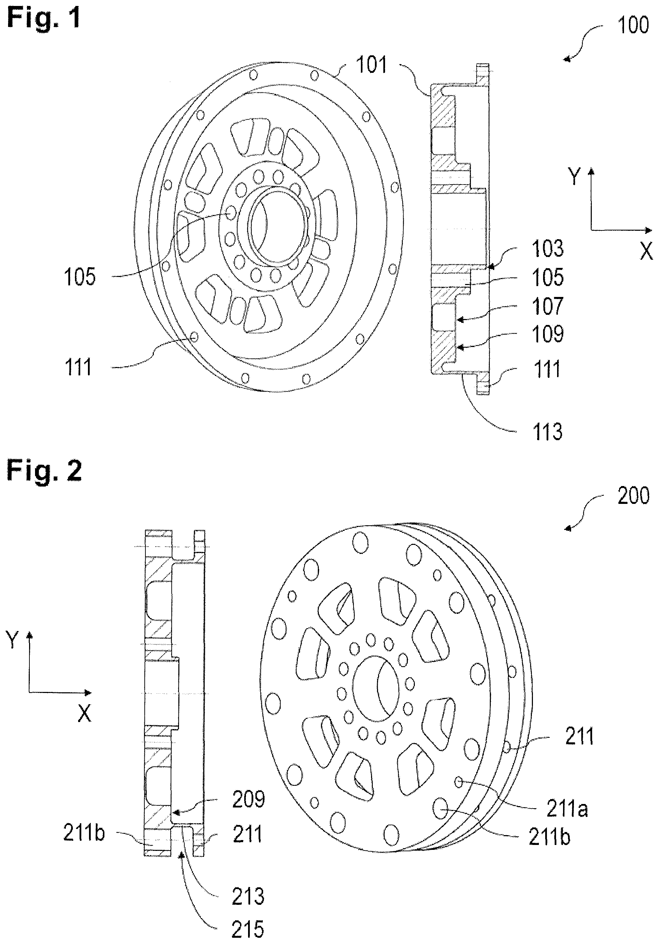

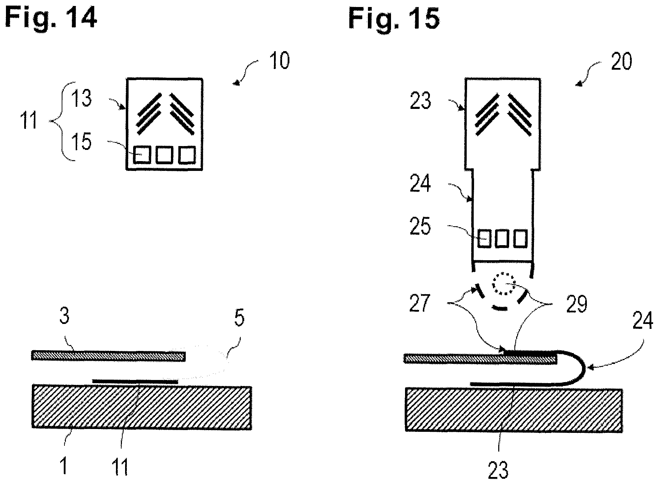

Fig. 1 zeigt einen ersten, monolithisch ausgeführten Drehmomentsensor 100 mit einem Grundkörper 101 aus Aluminium oder einer Aluminiumlegierung, der sich in einer radialen Richtung Y des Grundkörpers 101 von einem ringförmigen Innenflansch 103 mit ersten jeweils als Bohrung ausgebildeten Krafteinleitungsstellen 105 über einen mit dehnungsempfindlichen, elektrische Ausgangssignale generierenden Messwertaufnehmern, siehe z.B. Figuren 14 und 15, ausgestatteten, mechanisch geschwächten Sensorabschnitt 107 zu einem ringförmigen, monolithischen Außenflansch 109 erstreckt. In einem radial vom Außenflansch 109 vorstehenden Abschnitt befinden sich zweite jeweils als Bohrung ausgebildete Krafteinleitungsstellen 111, wobei diese zweiten Krafteinleitungsstellen 111 in einer axialen Richtung X des Grundkörpers 101 über einen in axialer Richtung X verlaufenden, als dünnwandigen Umfangswandabschnitt ausgebildeten radialelastischen Materialabschnitt 113 mit dem Sensorabschnitt 107 verbunden sind.

Fig. 2 zeigt einen zweiten, ebenfalls monolithisch ausgeführten Drehmomentsensor 200, bei dem der radialelastische Materialabschnitt 213 als dünnwandiger Boden einer am Außenumfang des Außenflanschs 209 umlaufenden Nut 215 ausgebildet ist.

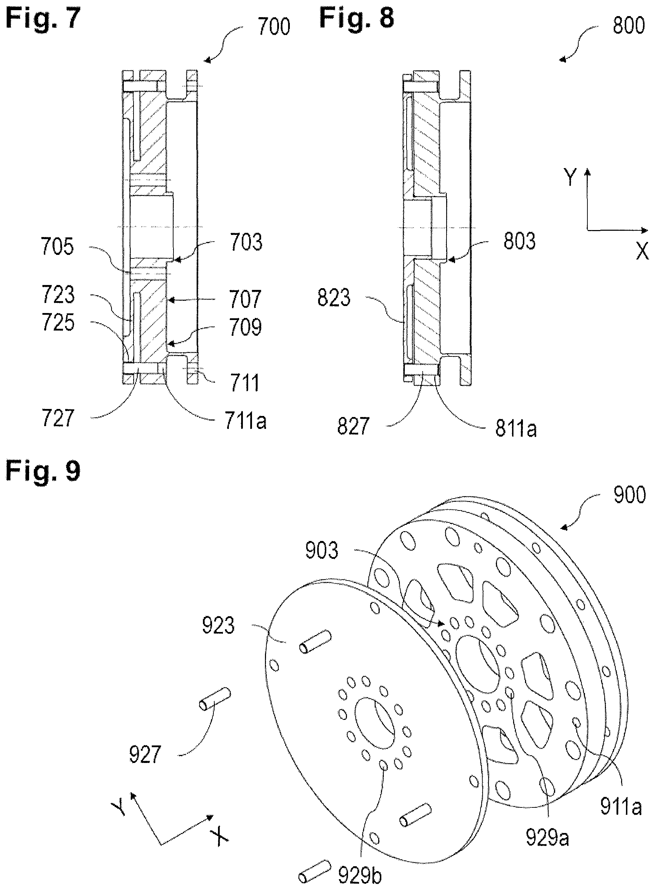

Der radialelastische Materialabschnitt 213 verbindet die zweiten Krafteinleitungsstellen 211 mit am Außenflansch 209 befindlichen dritten jeweils als Bohrung ausgebildeten Krafteinleitungssteilen 211a sowie ebenfalls als Bohrung ausgebildeten vierten Krafteinleitungsstellen 211b, die hier als Zugangsöffnungen dienen. Dabei sind die Zugangsöffnungen 211b in einem unbeanspruchten Grundzustand des Drehmomentsensors 200 konzentrisch zu den zweiten Krafteinleitungsstellen 211 angeordnet. Jedoch kann, wie weiter unten bezüglich der Figuren 7 bis 9 beschrieben, eine Zugangsöffnung 211b auch als Krafteinleitungsstelle dienen. Zu diesem Zweck kann ein Anschlagelement in einer dieser Krafteinleitungsstellen 211, 211b fixiert sein, das sich in axialer Richtung X erstreckt und in dem unbeanspruchten Grundzustand des Drehmomentsensors 200 umfangsseitig berührungslos von der jeweils anderen Krafteinleitungsstelle 211b, 211 umgeben ist. Im gezeigten Ausführungsbeispiel haben die Zugangsöffnungen 211b einen größeren Durchmesser als die zweiten Krafteinleitungsstellen 211. Selbstverständlich können die Zugangsöffnungen 211b zusätzlich oder ausschließlich dazu verwendet werden, Verbindungselemente, z.B. Schrauben oder Bolzen, zu den zweiten Krafteinleitungsstellen 211 passieren zu lassen, um diese Verbindungselemente zur Anbringung eines Bauteils, z.B. einer Hülse oder einer Gehäuses, an den zweiten Krafteinleitungsstellen 211 zu ermöglichen.

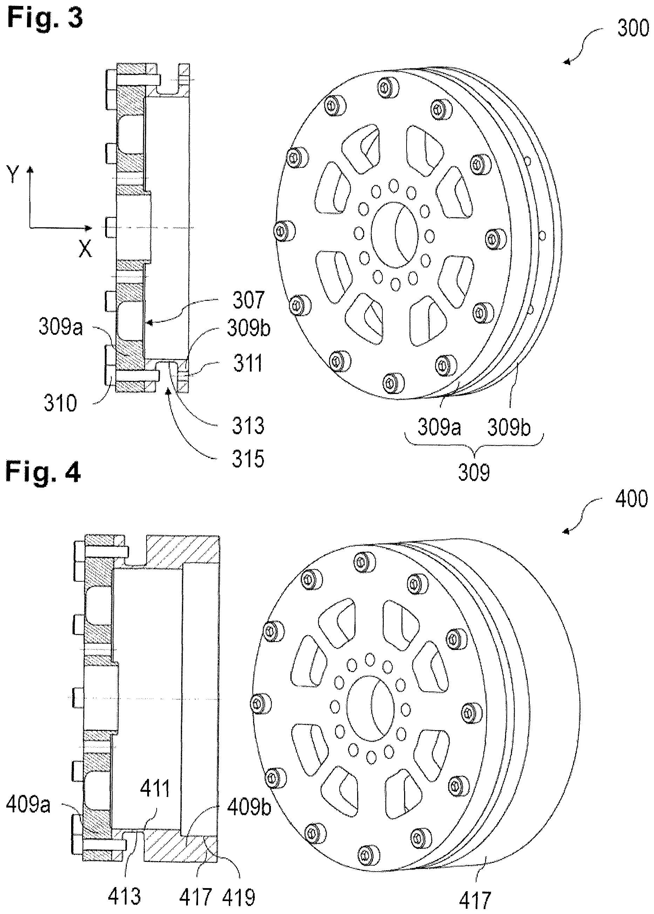

Fig. 3 zeigt einen dritten Drehmomentsensor 300 mit einem im Gegensatz zu den Figuren 1 und 2 mehrteilig ausgeführten Außenflansch 309. Ein erstes Teil 309a aus Aluminium oder einer Aluminiumlegierung des mehrteiligen Außenflansches 309 erstreckt sich monolithisch in Verlängerung des Sensorabschnitts 307, während ein zweites Teil 309b aus Stahl den radialelastischen Materialabschnitt 313 und die zweiten Krafteinleitungsstellen 311 umfasst. Das zweite Teil 309b ist dabei über parallel zur axialen Richtung X verlaufende Schrauben 310 lösbar mit dem ersten Teil 309a verbunden.

Fig. 4 zeigt einen vierten Drehmomentsensor 400, der sich von dem in Fig. 3 gezeigten dritten Drehmomentsensor 300 im Wesentlichen darin unterscheidet, dass dessen zweite Krafteinleitungsstellen 411 monolithisch mit einem Gehäuse 417 ausgeführt sind, welches einen der Mittelachse des Drehmomentsensors 400 zugewandten Lagersitz 419 aufweist.

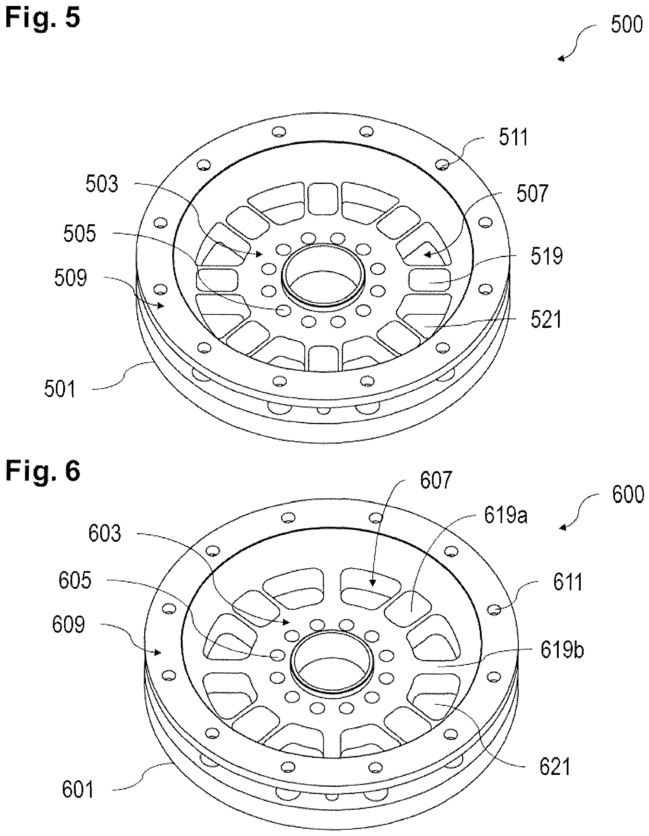

Fig. 5 zeigt einen fünften Drehmomentsensor 500, bei dem der ringförmige, mechanisch geschwächte Sensorabschnitt 507 durch radial verlaufende Verbindungsstege 519 gebildet ist, welche alle gleiche mechanische Eigenschaften haben und in Umfangsrichtung durch Ausschnitte 521 voneinander beabstandet sind. Dabei sind die Verbindungsstege 519 zur Messung von Schub- und/oder Biegespannungen eingerichtet und als Dehnmessstreifen ausgebildete Messwertaufnehmer an allen Verbindungsstegen 519 angebracht. Dabei können Messwertaufnehmer einer ersten Empfindlichkeit und Messwertaufnehmer einer zweiten Empfindlichkeit in Umfangsrichtung alternierend angebracht sein. Ebenso können alternierend Messwertaufnehmer an unterschiedlichen Stellen der Verbindungsstege 519 angebracht werden.

Fig. 6 zeigt einen sechsten Drehmomentsensor 600, bei dem der ringförmige, mechanisch geschwächte Sensorabschnitt 607 im Gegensatz zu dem in Fig. 5 gezeigten fünften Drehmomentsensor 500 radial verlaufende erste und zweite Verbindungsstege 619a, 619b hat, wobei die ersten Verbindungsstege 619a andere mechanische Eigenschaften haben als die zweiten Verbindungsstege 619b und in Umfangsrichtung alternierend mit dazwischen liegenden Ausschnitten 621 angeordnet sind. Messwertaufnehmer sind hier an beiden Verbindungsstegen 619a, 619b angebracht. Alternativ können die Messwertaufnehmer auch nur an den ersten oder zweiten Verbindungsstegen 619a, 619b angebracht sein. Die an den ersten Verbindungsstegen 619a angebrachten ersten Messwertaufnehmer liefern ausschließlich Signale eines ersten Messbereichs und die an den zweiten Verbindungsstegen 619b angebrachten zweiten Messwertaufnehmer liefern ausschließlich Signale eines zweiten Messbereichs, wobei sich die Messbereiche voneinander unterscheiden. Der eine Messbereich kann innerhalb des anderen liegen.

Die Verbindungsstege 519, 619a können entsprechend den Verbindungsstegen 14 mit den darauf angebrachten Messwertaufnehmern 61 wie in den Absätzen [0043] bis [0052] der EP 1 353 159 A2 beschrieben ausgebildet sein. Ebenso können die Verbindungsstege 619b massiv oder aber auch entsprechend den Verbindungsstegen 24 bzw. 24' mit den darauf angebrachten Messwertaufnehmern 61 wie in den Absätzen [0055] bis [0057] der EP 1 353 159 A2 beschrieben ausgebildet sein. Dies gilt auch für alle anderen hier beschriebenen Drehmomentsensoren mit Verbindungsstegen.

Fig. 7 zeigt einen siebten Drehmomentsensor 700, der sich von dem in Fig. 2 gezeigten zweiten Drehmomentsensor 200 im Wesentlichen dadurch unterscheidet, dass er mit einem Anschlagflansch 723 monolithisch ausgeführt ist, der sich an einer den zweiten Krafteinleitungsstellen 711 entgegengesetzten Seite des Außenflansches 709 parallel zum Sensorabschnitt 707 erstreckt. Der Anschlagflansch 723 ist nur mit dem Innenflansch 703 drehfest verbunden und weist mehrere zu den axialen Außenflanschbohrungen 711 und den dritten Außenflanschbohrungen 711a in einem unbeanspruchten Grundzustand des Drehmomentsensors 700 konzentrische Anschlagflanschbohrungen 725 (vierte Krafteinleitungsstellen) auf. Die Anschlagflanschbohrungen 725 haben einen größeren Durchmesser als die Außenflanschbohrungen 711 und 711a und sind sowohl in Umfangsrichtung äquidistant als auch bezüglich einer Linie in radialer Richtung Y durch die Mittelachse des Innenflansches 703 im gleichen Abstand einander gegenüberliegend. Die als Anschlagstifte ausgebildeten Anschlagelemente 727 sind in den dritten Außenflanschbohrungen 711a fixiert und erstrecken sich in axialer Richtung X, wobei sie im unbeanspruchten Grundzustand des Drehmomentsensors 700 umfangsseitig berührungslos von den Anschlagflanschbohrungen 725 umgeben sind. Dabei können entweder die Anschlagflanschbohrungen 725 oder die dritten Außenflanschbohrungen 711a wie hier gezeigt als Durchgangsbohrungen oder alternativ als Sacklöcher ausgebildet sein. Bei einer Überlastung des Sensorabschnitts 707 schlägt der Anschlagstift 727 in der entsprechenden Anschlagflanschbohrung 725 an und stützt sich dort ab, um den Sensorabschnitt 707 zu entlasten.

Fig. 8 zeigt einen achten Drehmomentsensor 800, der sich von dem in Fig. 7 gezeigten siebten Drehmomentsensor 700 im Wesentlichen darin unterscheidet, dass sein Anschlagflansch 823 nicht monolithisch mit dem Innenflansch 803 ausgeführt ist, sondern ein mit dem Innenflansch 803 lösbar verbundenes, separates Bauteil ist. Der Anschlagflansch 823 ist durch eine Presspassung mit dem Innenflansch 803 verbunden.

Fig. 9 zeigt einen neunten Drehmomentsensor 900, der sich von dem in Fig. 8 gezeigten achten Drehmomentsensor 800 im Wesentlichen darin unterscheidet, dass sein Anschlagflansch 923 nicht über eine Presspassung, sondern über parallel zur Axialrichtung X verlaufende, (nicht gezeigte) Schrauben mit dem Innenflansch 903 verbunden ist. Zu diesem Zweck sind entsprechende komplementäre Bohrungen 929a, 929b am Innenflansch 903 und am Anschlagflansch 923 vorhanden.

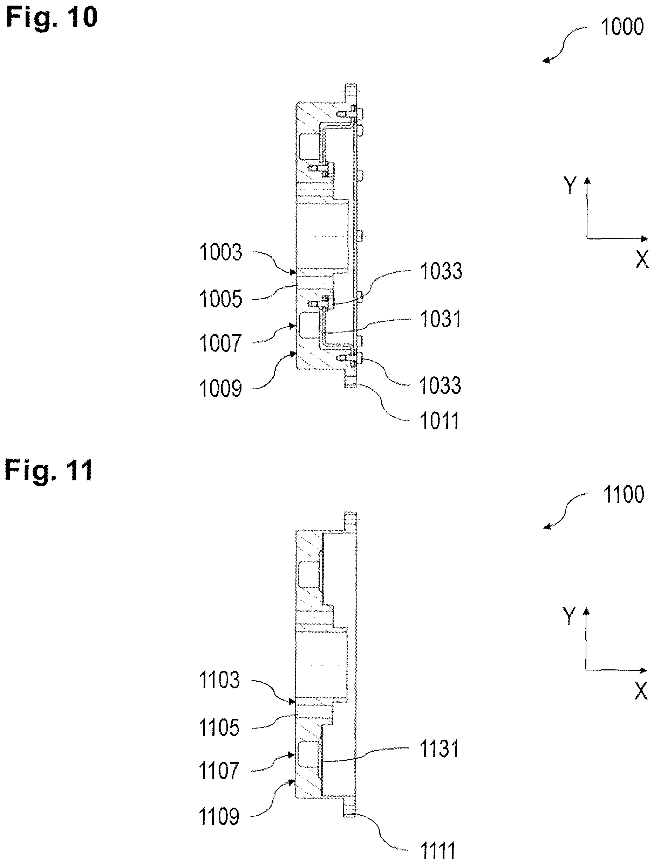

Fig. 10 zeigt einen zehnten Drehmomentsensor 1000, der eine gummielastische Dichtungsmembran 1031 zum einseitigen fluiddichten Überdecken des mechanisch geschwächten Sensorabschnitts 1007 am Drehmomentsensor 1000 aufweist. Dabei ist die Dichtungsmembran 1031 mittels Schrauben 1033 ringförmig zwischen dem Innenflansch 1003 und dem Außenflansch 1009 geklemmt. Dabei kann die Klemmung an nur einem vom Innenflansch 1003 und Außenflansch 1009 ausreichend sein. Die hier gezeigte Darstellung soll lediglich illustrieren, dass auch nur die Dichtungsmembran 1031 an herkömmlichen Drehmomentsensoren, wie beispielsweise aus EP 1 353 159 A2 bekannt, angebracht werden kann. Durch eine entsprechende Verlängerung des Außenflansches 1009 in der axialen Richtung X über die Schrauben 1033 hinaus kann ohne Weiteres der zuvor beschriebene radialelastische Materialabschnitt 1013 vorgesehen werden, wobei sich am Ende einer solchen Verlängerung die zweiten Krafteinleitungsstellen 1011 befinden.

Fig. 11 zeigt einen elften Drehmomentsensor 1100, der sich von dem in Fig. 10 gezeigten zehnten Drehmomentsensor 1000 im Wesentlichen darin unterscheidet, dass seine Dichtungsmembran 1131 ringförmig zwischen dem Innenflansch 1103 und dem Außenflansch 1109 mit dem Drehmomentsensor 1000 verklebt ist.

Die Dichtungsmembran 1031, 1131 des zehnten oder elften Drehmomentsensors 1000, 1100 kann ein Gummi-Formteil, Gummidrehteil oder ein durch Wasserstrahlschneiden hergestelltes Gummiteil sein, wobei zum Befestigen eine Kombination von Klemmen und Kleben ebenfalls möglich ist. Dabei hat die Dichtungsmembran 1031, 1131 einen um mindestens den Faktor 10² geringeren E-Modul als der Grundkörper 1001, 1101, vorzugsweise einen um den Faktor 10² bis 10⁴ geringeren E-Modul, vorzugsweise einen um den Faktor 10⁴ bis 10⁵ geringeren E-Modul. Je geringer der E-Modul der Dichtungsmembran im Vergleich zum Grundkörper ist, desto weniger verfälscht die Dichtungsmembran das Messergebnis des Drehmomentsensors.

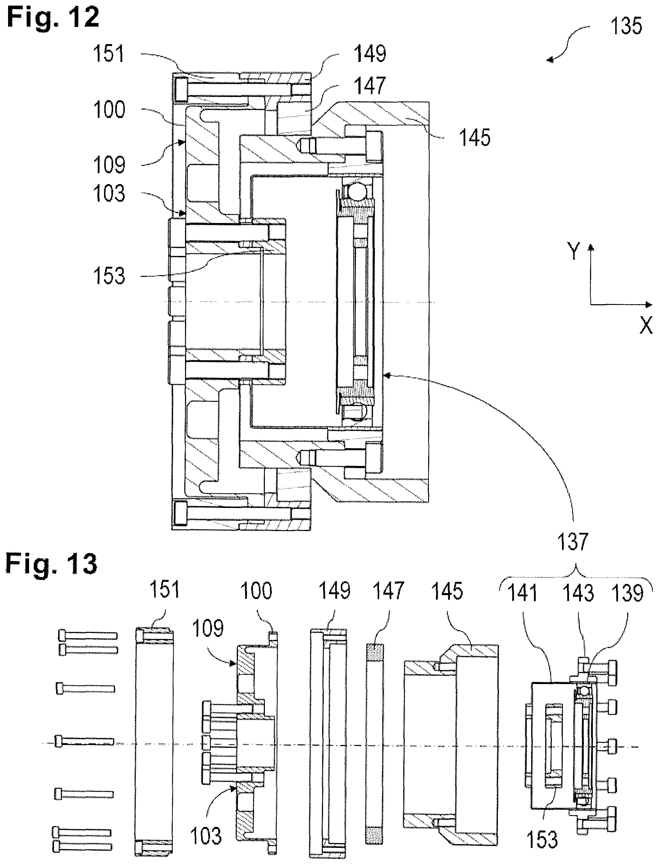

Fig. 12 und Fig. 13 zeigen den ersten Drehmomentsensor 100 aus Fig. 1 in einer Leichtbauanordnung 135 mit einem Harmonic-Drive-Getriebe 137, das von innen nach außen einen Wave Generator 139, einen Flexspline 141 und einen Circular Spline 143 hat. Der Circular Spline 143 ist mit einem Gehäuse 145 verschraubt, das wiederum über ein Kreuzrollenlager 147 an einem Abtriebsgehäuse 149 gelagert ist. An dieses Abtriebsgehäuse 149 ist mittels eines Abtriebsflansches 151 der Außenflansch 109 des Drehmomentsensors 100 geschraubt. Der Innenflansch 103 des Drehmomentsensors 100 wiederum ist über einen Gewindering 153 mit dem Flexspline 141 verschraubt.

Fig. 14 zeigt einen herkömmlichen Dehnmessstreifen 10, der als oben bezeichneter Messwertaufnehmer zu verstehen ist. Dieser Dehnmessstreifen 10 hat einen streifenförmigen Grundkörper 11 mit einem Messgitterabschnitt 13 an einem Ende und einem als Lötpad 15 ausgebildeten elektrischen Anschlusspunkt an einem entgegengesetzten, anderen Ende. Um diesen als Ganzes an einem Bauteil 1 befestigbaren Dehnmessstreifen 10 elektrisch mit einem elektrischen Bauteil 3 zu verbinden, müssen Leitungen 5 erst an das Lötpad 15 und anschließend an das elektrische Bauteil 3 gelötet werden.

Fig. 15 zeigt einen alternativen Dehnmessstreifen 20, der sich von dem in Fig. 14 gezeigten herkömmlichen Dehnmessstreifen 10 im Wesentlichen darin unterscheidet, dass er nur mit seinem Messgitterabschnitt 23 an dem Bauteil 1 befestigbar ist und dass statt separater Leitungen 5 der Dehnmessstreifen 20 über einen sich an den Messgitterabschnitt 23 anschließenden Verbindungsabschnitt 24 verfügt, der an seinem dem Messgitterabschnitt 23 entgegengesetzten Ende das Lötpad 25 aufweist und dessen Länge mindestens dem Messgitterabschnitt 23 entspricht. Dabei ist der Verbindungsabschnitt 24 streifenförmig und biegeelastisch, wobei er auch in einem unbeanspruchten Grundzustand in eine Vorzugsrichtung gebogen sein kann, so dass er beispielsweise U-förmig ist. Der gezeigte Dehnmessstreifen 20 hat darüber hinaus einen abgerundeten Halteabschnitt 27, der sich jenseits des Lötpads 25 an den Verbindungsabschnitt 24 anschließt und zum temporären Halten des Verbindungsabschnitts 24 an dem elektrischen Bauteil 3 ausgebildet ist. Zu diesem Zweck kann der Halteabschnitt 27, wie hier gezeigt, eine zentrale Durchgangsbohrung 29 haben, alternativ auch eine Vertiefung, in welche ein Instrument zum Halten des Dehnmessstreifens 20 am elektrischen Bauteil 3 eingeführt werden kann. Ferner kann der Halteabschnitt 27 zu diesem Zweck auch oder nur selbstklebend sein.

## Patentansprüche

1. Drehmomentsensor (1000; 1100) mit einem Grundkörper (1001; 1101), der sich in einer radialen Richtung (Y) des Grundkörpers von einem ringförmigen Innenflansch (1003; 1103) mit ersten Krafteinleitungsstellen (1005; 1105) über einen mit Ausgangssignale generierenden Messwertaufnehmern (10, 20) ausgestatteten, mechanisch geschwächten Sensorabschnitt (1007; 1107) zu einem ringförmigen Außenflansch (1009; 1109) mit zweiten Krafteinleitungsstellen (1011; 1111) erstreckt, **dadurch gekennzeichnet, dass** eine axial zwischen dem Außenflansch (1009; 1109) und dem Innenflansch (1003; 1103) angeordnete gummielastische Dichtungsmembran (1031; 1131) den mechanisch geschwächten Sensorabschnitt (1007; 1107) fluiddicht überdeckt, wobei sich die Dichtungsmembran (1031; 1131) axial zwischen den zweiten Krafteinleitungsstellen (1011; 1111) und dem mechanisch geschwächten Sensorabschnitt (1007; 1107) befindet.

2. Drehmomentsensor (1000; 1100) nach Anspruch 1,
**dadurch gekennzeichnet, dass** die Dichtungsmembran (1031; 1131) an den Drehmomentsensor (1000; 1100) geklemmt oder mit ihm verklebt ist.

3. Drehmomentsensor (1000; 1100) nach Anspruch 2,
**dadurch gekennzeichnet, dass** die Dichtungsmembran (1031; 1131) an dem Außenflansch (1009; 1109) und/oder Innenflansch (1003; 1103) des Drehmomentsensors (1000; 1100) angebracht ist.

4. Drehmomentsensor (1000; 1100) nach einem der vorhergehenden Ansprüche,
**dadurch gekennzeichnet, dass** die Dichtungsmembran (1031; 1131) als scheibenförmige Ringmembran ausgebildet ist.

5. Drehmomentsensor (1000; 1100) nach einem der vorhergehenden Ansprüche,
**dadurch gekennzeichnet, dass** die Dichtungsmembran (1031; 1131) ein Gummi-Formteil, Gummidrehteil oder ein mittels Wasserstrahlbearbeitung hergestelltes Gummiteil ist.

6. Drehmomentsensor (1000; 1100) nach einem der vorhergehenden Ansprüche,
**dadurch gekennzeichnet, dass** die Dichtungsmembran (1031; 1131) einen um mindestens den Faktor 10² geringeren E-Modul als der Grundkörper (1001; 1101) hat.

7. Drehmomentsensor (1000; 1100) nach Anspruch 6,
**dadurch gekennzeichnet, dass** die Dichtungsmembran (1031; 1131) einen um den Faktor 10³ bis 10⁵ geringeren E-Modul, insbesondere einen um den Faktor 10⁴ bis 10⁵ geringeren E-Modul hat.

8. Drehmomentsensor (1000; 1100) nach einem der vorhergehenden Ansprüche,
**dadurch gekennzeichnet, dass** die Messwertaufnehmer Dehnmessstreifen (20) sind, die einen mit dem Grundkörper (1001; 1101) verbundenen Messgitterabschnitt (23) und einen sich an den Messgitterabschnitt (23) anschließenden, freien Verbindungsabschnitt (24) mit mindestens einem elektrischen Anschlusspunkt (25) haben.

9. Drehmomentsensor (1000; 1100) nach Anspruch 8,
**dadurch gekennzeichnet, dass** sich jenseits des mindestens einen Verbindungspunkts (25) am Verbindungsabschnitt (24) ein Halteabschnitt (27) anschließt, der zum temporären Halten des Verbindungsabschnitts (24) an einem elektrischen Bauteil (3) ausgebildet ist.

## Claims

1. A torque sensor (1000; 1100) having a base body (1001; 1101) which extends in a radial direction (Y) of the base body from an annular inner flange (1003; 1103) having first force application points (1005; 1105), *via* a mechanically weakened sensor portion (1007; 1107) equipped with measurement transducers (10, 20) which generate output signals, to an annular outer flange (1009; 1109) having second force application points (1011; 1111),
**characterized in that** a rubber-elastic sealing membrane (1031; 1131) arranged axially between the outer flange (1009; 1109) and the inner flange (1003; 1103) covers the mechanically weakened sensor portion (1007; 1107) in a fluid-tight manner, wherein the sealing membrane (1031; 1131) is located axially between the second force application points (1011; 1111) and the mechanically weakened sensor portion (1007; 1107).

2. The torque sensor (1000; 1100) as claimed in claim 1,
**characterized in that** the sealing membrane (1031; 1131) is clamped to the torque sensor (1000; 1100) or adhesively bonded thereto.

3. The torque sensor (1000; 1100) as claimed in claim 2,
**characterized in that** the sealing membrane (1031; 1131) is attached to the outer flange (1009; 1109) and/or inner flange (1003; 1103) of the torque sensor (1000; 1100).

4. The torque sensor (1000; 1100) as claimed in any one of the preceding claims,
**characterized in that** the sealing membrane (1031; 1131) is in the form of a diskshaped annular membrane.

5. The torque sensor (1000; 1100) as claimed in any one of the preceding claims,
**characterized in that** the sealing membrane (1031; 1131) is a molded rubber part, a turned rubber part, or a rubber part produced by means of water-jet machining.

6. The torque sensor (1000; 1100) as claimed in any one of the preceding claims,
**characterized in that** the sealing membrane (1031; 1131) has a modulus of elasticity which is lower than that of the base body (1001; 1101) by at least a factor of 10².

7. The torque sensor (1000; 1100) as claimed in claim 6,
**characterized in that** the sealing membrane (1031; 1131) has a modulus of elasticity which is lower by a factor of from 10³ to 10⁵, in particular a modulus of elasticity which is lower by a factor of from 10⁴ to 10⁵.

8. The torque sensor (1000; 1100) as claimed in any one of the preceding claims,
**characterized in that** the measurement transducers are strain gauges (20) which have a measurement grid portion (23) connected to the base body (1001; 1101) and a free connecting portion (24) which adjoins the measurement grid portion (23) and has at least one electrical connection point (25).

9. The torque sensor (1000; 1100) as claimed in claim 8,
**characterized in that** a holding portion (27) adjoins the connecting portion (24) on the other side of the at least one connecting point (25), which holding portion is designed for temporarily holding the connecting portion (24) on an electrical component (3).

## Revendications

1. Capteur de couple (1000, 1100) comprenant un corps de base (1001, 1101), qui s'étend dans une direction radiale (Y) du corps de base à partir d'une bride intérieure annulaire (1003, 1103) avec premières positions de transmission de puissance (1005, 1105) en passant par une section de capteur (1007, 1107) affaiblie mécaniquement équipée de transducteurs (10, 20) produisant des signaux de sortie, jusqu'à une bride extérieure annulaire (1009, 1109) avec des secondes positions de transmission de puissance (1011, 1111),
**caractérisé en ce qu'**une membrane d'étanchéité élastique disposée axialement entre la bride extérieure (100ç, 1109) et la bride intérieure (1003, 1103) recouvre de manière étanche au fluide la section de capteur affaiblie mécaniquement (1007, 1107), la membrane d'étanchéité (1031, 1131) se trouvant axialement entre les secondes positions de transmission de puissance (1011, 1111) et la section de capteur affaiblie mécaniquement (1007, 1107).

2. Capteur de couple (1000, 1100) selon la revendication 1, **caractérisé en ce que** la membrane d'étanchéité (1031, 1131) est serrée sur le capteur de couple (1000, 1100) ou est collée à ce dernier.

3. Capteur de couple (1000, 1100) selon la revendication 1, **caractérisé en ce que** la membrane d'étanchéité (1031, 1131) est montée sur la bride extérieure (1009, 1109) et/ou sur la bride intérieure (1003, 1103) du capteur de couple (1000, 1100).

4. Capteur de couple (1000, 1100) selon l'une quelconque des revendications précédentes, **caractérisé en ce que** la membrane d'étanchéité (1031, 1131) est conçue sous la forme de membrane annulaire discoïde.

5. Capteur de couple (1000, 1100) selon l'une quelconque des revendications précédentes, **caractérisé en ce que** la membrane d'étanchéité (1031, 1131) est une pièce moulée en caoutchouc, une semelle orientable en caoutchouc ou une pièce en caoutchouc fabriquée par traitement à hydrojet.

6. Capteur de couple (1000, 1100) selon l'une quelconque des revendications précédentes, **caractérisé en ce que** la membrane d'étanchéité (1031, 1131) présente un module d'élasticité plus faible d'au moins un facteur 10² que celui du corps de base (1001, 1101).

7. Capteur de couple (1000, 1100) selon la revendication 6, **caractérisé en ce que** la membrane d'étanchéité (1031, 1131) présente un module d'élasticité plus faible d'un facteur compris entre 10³ et 10⁵, en particulier un module d'élasticité plus faible d'un facteur compris entre 10⁴ et 10⁵.

8. Capteur de couple (1000, 1100) selon l'une quelconque des revendications précédentes, **caractérisé en ce que** les transducteurs sont des jauges de contrainte (20) qui présente une section de grille de mesure (23) reliée au corps de base (1001, 1101) et une section de liaison libre (24) se raccordant à la section de grille de mesure (23) par au moins un point de raccordement électrique (25).

9. Capteur de couple (1000, 1100) selon la revendication 8, **caractérisé en ce qu'**une section de support (27) de chaque côté dudit point de raccordement (25) se raccorde à la section de liaison (24), ladite section de support étant conçue pour supporter temporairement la section de liaison (24) sur un composant électrique (3).
